# EUROPEAN PATENT APPLICATION

(11) **EP 3 988 967 A1**
(43) Date of publication of application: **27.04.2022**
(21) Application number: 19950861.5
(22) Date of filing: 02.11.2019
(51) Int. Cl.: G01S 19/42, G01S 19/00

(54) **POSITIONING METHOD COMBINING VIRTUALITY AND REALITY**

(71) Applicant: Gamania Digital Entertainment Co., Ltd., 11494 Taipei City (TW)
(72) Inventor: JUANG, Sam, 11494 Taipei City (TW)
(74) Representative: karo IP
(86) International application number: PCT/CN2019/115190
(87) International publication number: WO 2021/082024

(57) **Abstract**

The present invention discloses a method for real and virtual combined positioning, it not only sends positioning information to the server through the electronic device for tracking the positioning of the electronic device, but also further captures external scene image and scene sound through the electronic device, or the server generates corresponding scene image and scene sound based on the positioning information, further used to confirm the positioning of electronic device.

## Description

### FIELD OF THE INVENTION

The present invention relates generally to a positioning method, and more particularly to a method for real and virtual combined positioning.

### BACKGROUND OF INVENTION

Wireless communication systems are widely deployed to provide telecommunications services such as telephone, television, information, messaging and broadcasting. A typical wireless communication system can use block scrambling multiple access technology that can support communication with multiple users by sharing available system resources, such as bandwidth and transmission power. Examples of the implementation of block scrambling multiple access technology include code division multiple access (CDMA) system, time division multiple access (TDMA) system, frequency division multiple access (FDMA) system, orthogonal frequency division multiple access (OFDMA) system, single carrier frequency division multiple access (SC-FDMA) system and time division synchronous code division multiple access (TD-SCDMA) system.

Although absolute positioning techniques (e.g. GPS, Wi-Fi and proximity tags) can provide reliable and accurate positioning information, updating such information at the maximum possible rate will consume considerable power and can not guarantee complete coverage. Relative positioning techniques (e.g., pedestrian dead reckoning or PDR) are based on previously determined positions and use the inertial sensor of the user device to estimate the current position of the user device. It can even be used in environments where absolute position information is not available. However, estimation of the current position using this technique will have cumulative errors.

It is noted that mobile devices are often equipped with embedded sensors that can be used to perform relative positioning techniques (for example, accelerometers, gyroscopes and magnetometers). The central processing unit (CPU) of the mobile device can collect samples generated by the sensor and perform some processing based on the samples. For example, CPU can calculate the movement and orientation of the mobile device or the number of steps that the user of the mobile device has already walked.

Due to the rapid development of science and technology, location based services (LBS) are widely used in the daily life of modern people. Previously, positioning systems were used only for military purposes, but in recent years they have been introduced into related applications such as navigation, disaster relief, medical care and shopping. There are many positioning methods. Apart from the common global positioning system (GPS), there are also many researches on such techniques as 3G wireless base positioning in recent years. The GPS can carry out accurate mobile positioning and speed measurement positioning, and the accuracy can reach 10 meters. Its maximum area can reach up to 98% of the earth's surface. However, in streets full of skyscrapers or in indoor environments, GPS may be interfered by refraction, diffraction, and furniture layout, resulting in considerable errors when using GPS for indoor positioning.

Nowadays, modules such as ZigBee, Wi-Fi, and Beacon are replacing the role of GPS for indoor positioning, and many algorithms and mechanisms are developed. Among them, fingerprint comparison is most widely used. The fingerprint comparison method requires preliminary training to measure the wireless positioning signal forms at different positions, and a database established to store the data. Upon positioning, the current signals are compared to the signal forms in the database, and one point or multiple points similar to the current signal is selected to estimate the target position. However, merely using the detected RSSI of a known wireless access point as the reference basis for comparison may be easily affected by the environment to cause misjudgment or high error rates.

### SUMMARY OF THE PRESENT INVENTION

Based on the above problems, the present invention provides a method for real and virtual combined positioning, which combines real environmental conditions with virtual real environmental conditions to position the corresponding landmark on the positioning system, so as to improve the positioning reliability.

The main object of the present invention is to provide a method for real and virtual combined positioning, which uses captured or stored real environment conditions to match the positioning information, so as to increase the reliability of positioning information.

To achieve the above object, the present invention discloses a method for real and virtual combined positioning, in which, a positioning request is firstly sent by a server to a first electronic device, then, according to the positioning request, the first electronic device generates and transmits a positioning information, at least one scene image and at least one scene sound to the server, wherein, the image capturing unit captures at least one scene image nearby the first electronic device and sends it to the server, and the sound capturing unit captures at least one scene sound near the first electronic device and sends it to the server. The server confirms the correctness of the positioning information and confirms the location of the first electronic device by comparing the at least one scene image and the at least one scene sound to the reference image and the reference sound in the database. Thus, through the captured scene image and scene sound, the reliability of positioning information can be improved.

In an embodiment provided by the present invention, said at least one scene image is an image of building object, indoor object or person.

In an embodiment provided by the present invention, said at least one scene sound is a sound of fluid, running machine, animal or insect.

In an embodiment of the present invention, in the step where said first electronic device generates a positioning information at least one scene image and at least one scene sound according to the positioning request and sends them to the server, said first electronic device obtains the positioning information through a global positioning system (GPS), a gyroscope, an accelerometer or a combination thereof to send to the server.

In an embodiment provided by the present invention, the method for real and virtual combined positioning according to the present invention also includes a step where a second electronic device sends the positioning request to the server.

In an embodiment provided by the present invention, in the step where the first electronic device produces a positioning information, at least one scene image and at least one scene sound according to the positioning request and sends them to the server, the first electronic device further sends a time mark to the server. The time mark corresponds to the at least one scene image and the at least one scene sound, so that the server can compare the at least one scene image and the at least one scene sound based on the positioning information and further on the time mark.

To achieve the above object, the present invention also discloses a method for real and virtual combined positioning, in which, firstly a positioning request is sent by a server to a first electronic device, and then, the first electronic device generates a positioning information according to the positioning request, and meanwhile generates a virtual information based on the positioning information. The virtual information contains a virtual parameter of at least one virtual image and at least one virtual sound; then, based on the virtual information, the server creates at least one virtual image and at least one virtual sound, and then compares them to at least one reference image and at least one reference sound in the database to confirm the correctness of the positioning information, and to further confirm the position of the first electronic device. In this way, the virtual image and virtual sound can also be used to improve the reliability of the positioning information.

In an embodiment provided by the present invention, said at least one virtual image is an image of building object, indoor object or person.

In an embodiment provided by the present invention, said at least one virtual sound is a sound of fluid, running machine, animal or insect.

In an embodiment provided by the present invention, in the step where the first electronic device sends a positioning information and a multimedia information to the server through an application and according to the positioning request, the first electronic device obtains the positioning information through a global positioning system (GPS), a gyroscope, an accelerometer or a combination thereof to send to the server.

In an embodiment provided by the present invention, said method for real and virtual combined positioning also includes a step where a second electronic device sends the positioning request to the server.

In an embodiment provided by the present invention, in the step where the first electronic device generates a positioning information according to the positioning request, and generates a virtual information based on the positioning information to send to the server, the first electronic device generates the virtual information based on the latitude and longitude and a region name of the positioning information.

In an embodiment provided by the present invention, in the step where the server creates at least one virtual image and at least one virtual sound based on the virtual information, the server reads a plurality of image data and a plurality of sound data in the region database based on the virtual information to produce at least one virtual image and at least one virtual sound.

In an embodiment provided by the present invention, the virtual information further contains a time mark of the at least one virtual image and the at least one virtual sound. Specifically, in the step where the server creates at least one virtual image and at least one virtual sound based on the virtual information, the first electronic device creates the at least one virtual image and the at least one virtual sound based on the positioning information and further on the time mark.

Compared with the prior art, the beneficial technical efficacy of the present invention is that the reliability of positioning can be improved.

### BRIEF DESCRIPTION OF THE DRAWINGS

Fig. 1 is a flow diagram of an embodiment of the present invention;
Fig. 2 is a system diagram of an embodiment of the present invention;
Fig. 3 is a system diagram of an embodiment of the present invention;
Fig. 4 is a flow diagram of another embodiment of the present invention;
Fig. 5 is a system diagram of another embodiment of the present invention;
Fig. 6 is a flow diagram of another embodiment of the present invention; and
Fig. 7 is a system diagram of another embodiment of the present invention.

### DETAILED DESCRIPTION OF THE PRESENT INVENTION

The present invention is described in detail below with respect to specific embodiments and with reference to the accompanying drawings, so that those skilled in the art can have a complete understanding of the features and objects mentioned above.

### Embodiment 1, method for real and virtual combined positioning

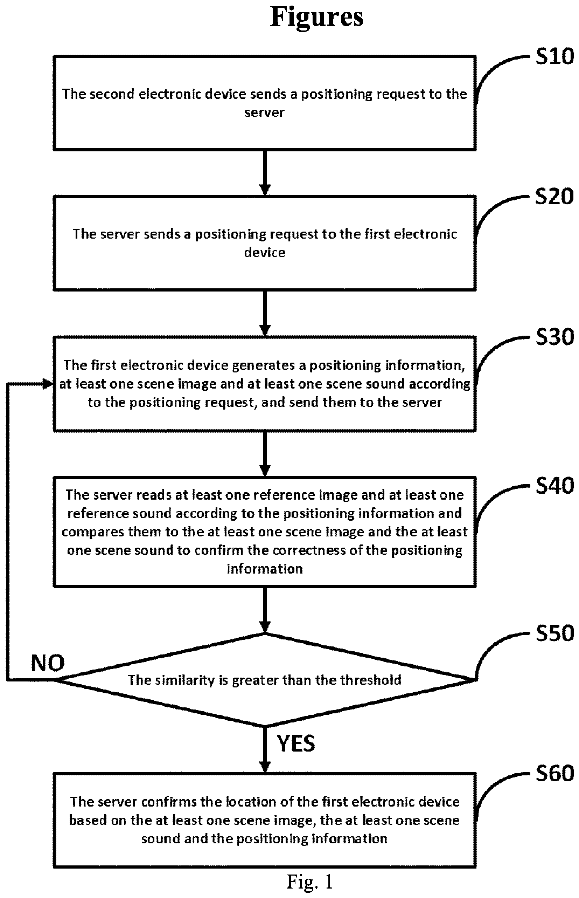

Fig. 1 shows the flow of an embodiment of the present invention. As shown, a method for real and virtual combined positioning of the present invention includes:
Step S10: The second electronic device sends a positioning request to the server;
Step S20: The server sends a positioning request to the first electronic device;
Step S30: The first electronic device generates a positioning information, at least one scene image and at least one scene sound according to the positioning request, and send them to the server;
Step S40: The server reads at least one reference image and at least one reference sound according to the positioning information and compares them to the at least one scene image and the at least one scene sound;
Step S50: The server judges if the similarity is greater than the threshold; and
Step S60: The server confirms the location of the first electronic device based on the at least one scene image, the at least one scene sound and the positioning information.

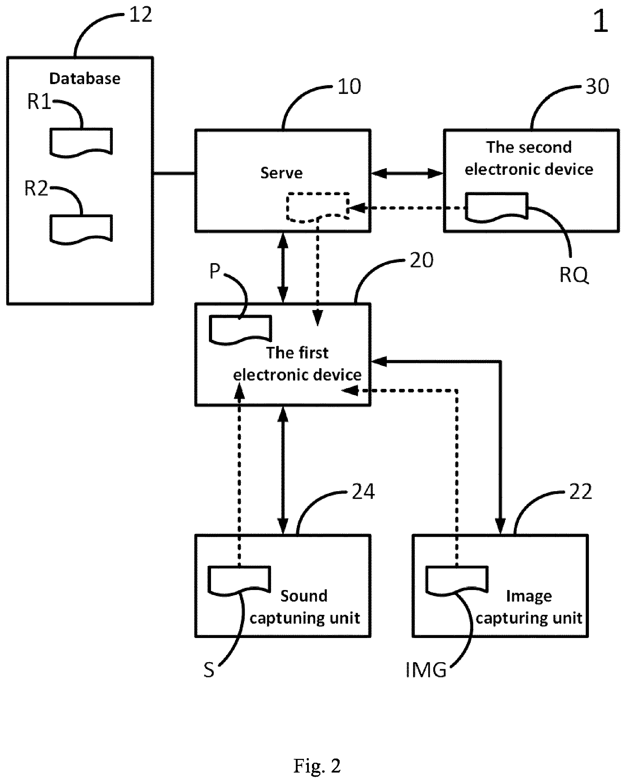

Fig. 2 shows the system of an embodiment of the present invention. As shown, the positioning system 1 used in the method for real and virtual combined positioning comprises a server 10, a first electronic device 20 and a second electronic device 30, wherein the server 10 is further connected to a database 12 through telecommunication, the first electronic device 20 is further electronically connected to a image capturing unit 22 and one sound capturing unit 24.

In Step S10, the second electronic device 30 sends a positioning request RQ to the server 10 via operation by the user; then in Step S20, the positioning request RQ is transferred to the first electronic device 20 via the server 10. Therefore, the second electronic device 30 sends the positioning request RQ to the first electronic device 20 through the server 10. In step S30, according to the positioning request RQ received, the first electronic device 20 initiates the electrically connected image capturing unit 22 and sound capturing unit 24 to capture at least one scene image IMG and at least one scene sound S nearby the first electronic device 20. Based on this, the first electronic device 20 sends the positioning information P, the at least one scene image IMG and the at least one scene sound S together to the server 10, wherein the first electronic device 20 obtains the positioning information P through a global positioning system (GPS), a gyroscope, an accelerometer or a combination thereof. In this embodiment, the first electronic device 20 is a mobile phone, and the image capturing unit 22 and sound capturing unit 24 are built-in camera and microphone of the mobile phone. However, the present invention is not limited to his. The first electronic device 20 can also be a laptop computer, while the image capturing unit 22 and sound capturing unit 24 are respectively the built-in camera and microphone of the laptop computer. Moreover, the second electronic device 30 can also be a mobile phone, a laptop computer or any other mobile device, such as a tablet or Google glasses.

In Step S40, according to the positioning information P, the server 10 reads the corresponding reference image R1 and reference sound R2 in the database 12 to compare them with the at least one scene image IMG and at least one scene sound S from the first electronic device 20. In Step S50, by comparing the reference image R1 and reference sound R2 with the at least one scene image IMG and the at least one scene sound S from the first electronic device 20 to determine if the similarity is greater than the threshold (e.g., 80%), the correctness of the positioning information P is confirmed. When the similarity is greater than the threshold, Step S60 is executed. On the other hand, when the similarity is not greater than the threshold, Step S30 is executed. Finally, in Step S60, the server 10 confirms the correctness of the positioning information P on the basis of the at least one scene image IMG and the at least one scene sound S from the first electronic device 20. The location of the first electronic device 20 is confirmed based on the at least one scene image IMG and the at least one scene sound S together with the positioning information P. The location of the first electronic device 20 is further sent back to the second electronic device 30. The scene image IMG and the scene sound S can also be sent to the second electronic device 30 together.

Specifically, the scene image IMG is an image of building object, indoor object or person. The scene sound S is a sound of fluid, running machine, animal or insect.

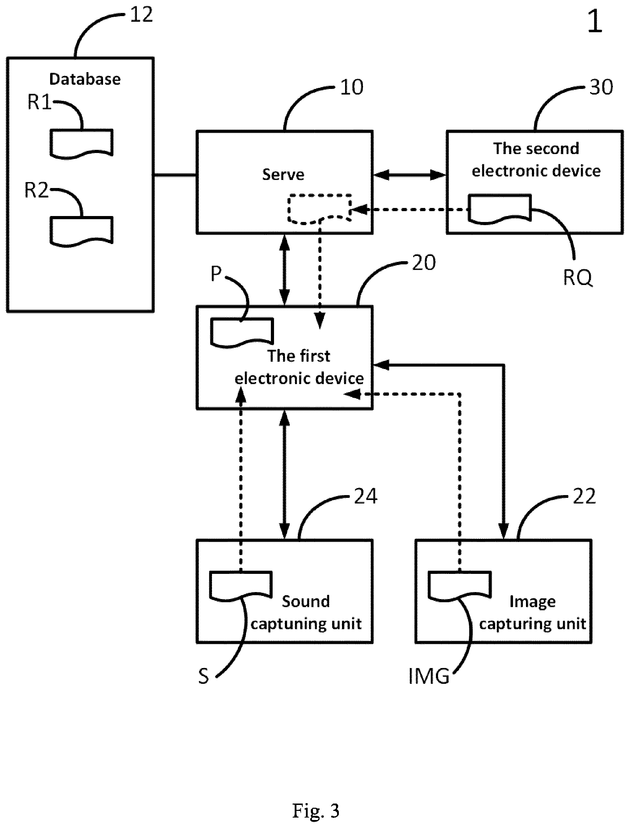

Referring further to Fig. 3, in another embodiment, the first electronic device 20 further sends a time mark to the server. The time mark corresponds to the at least one scene image, the at least one scene sound and the positioning information. The server compares the at least one scene image and the at least one scene sound based on the positioning information and further on the time mark.

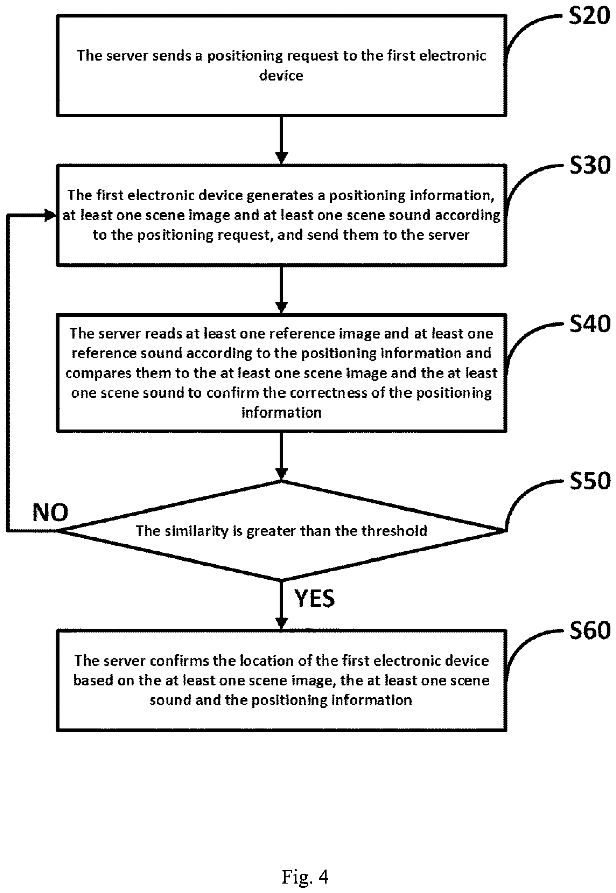

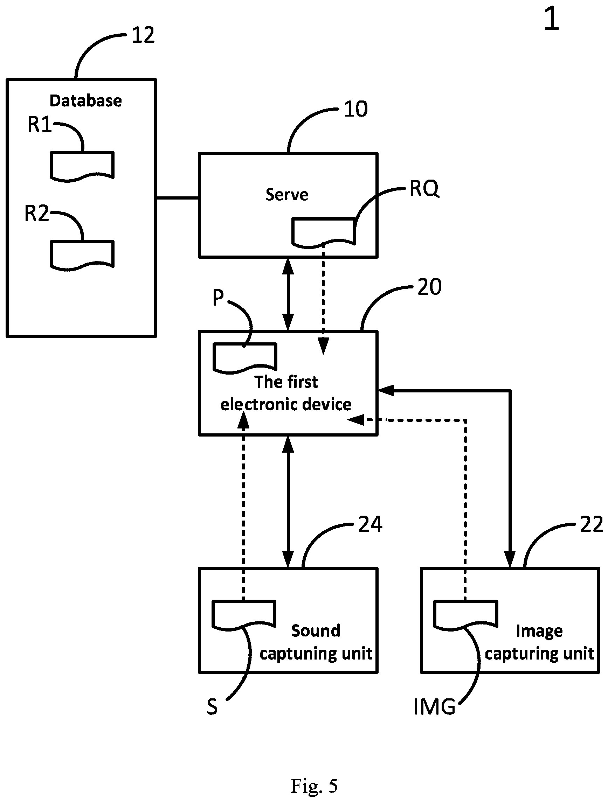

In the above embodiment, the method for real and virtual combined positioning of the present invention confirms the positioning information by capturing the external image and sound nearby the electronic device, and further confirms the position of the first electronic device 20. The above embodiment describes a case wherein other uses request positioning to locate the first electronic device 20, but in the other embodiment, the user sets the server 10 to track the first electronic device 20, and therefore the server 10 sends a positioning request RQ directly, as shown in Fig. 4. The difference between Fig. 1 and Fig. 4 is that Fig. 4 does not include Step S10. Instead, the positioning request RQ is sent directly by the server 10. The positioning system 2 adopted is as shown in Fig.5. The positioning system 2 includes a server 10 and a first electronic device 20. As the server 10 and the first electronic device 20 are the same as described in the previous embodiment, repeated description is not made here.

In addition, the present invention can also directly retrieve the data in the database 12 of the server 10 to further confirm the position.

### Embodiment 2, method for real and virtual combined positioning (the second method)

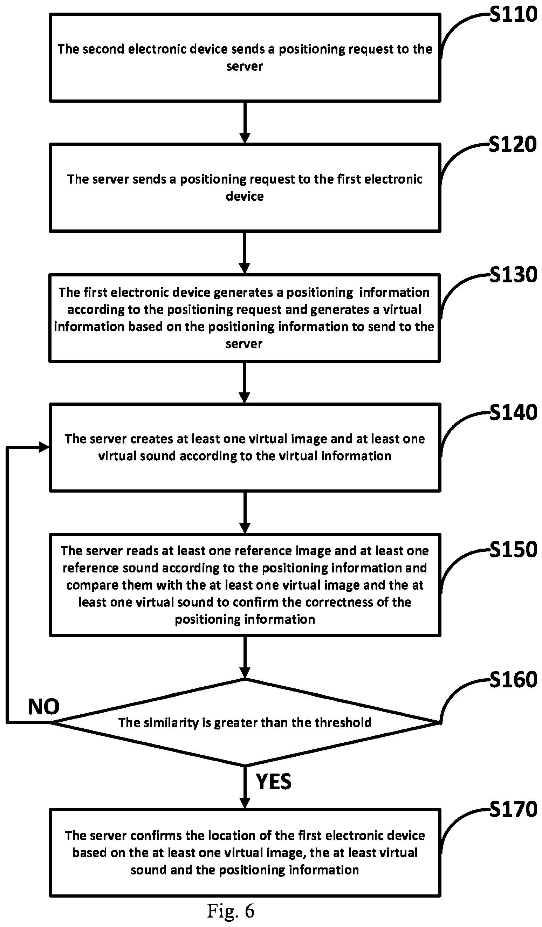

Fig. 6 shows the flow of another embodiment of the present invention. As shown, the steps of the method for real and virtual combined positioning of the present invention include:
Step S110: The second electronic device sends a positioning request to the server;
Step S120: The server sends a positioning request to the first electronic device;
Step S130: The first electronic device generates a positioning information according to the positioning request and generates a virtual information based on the positioning information to send to the server;
Step S140: The server creates at least one virtual image and at least one virtual sound according to the virtual information;
Step S150: The server reads at least one reference image and at least one reference sound according to the positioning information and compare them with the at least one virtual image and the at least one virtual sound;
Step S160: The server judges if the similarity is greater than the threshold; and
Step S170: The server confirms the location of the first electronic device based on the at least one virtual image, the at least one virtual sound and the positioning information.

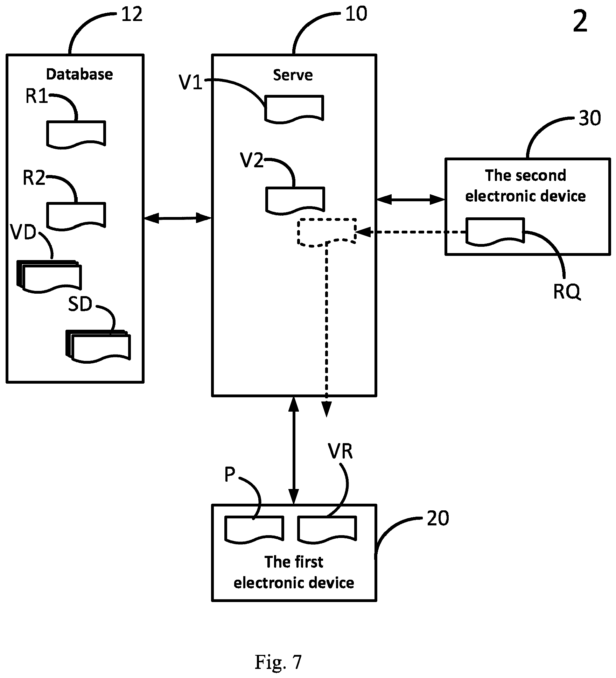

The Fig. 7 shows the system of another embodiment of the present invention. As shown, the positioning system 3 used in the method for real and virtual combined positioning of the present invention comprises a server 10, a first electronic device 20 and a second electronic device 30, wherein the server 10 is connected to database 12.

Step S110 and Step S120 are the same as Step S10 and Step S20, and are therefore not described here. In step S130, the first electronic device 20 generates a positioning information P according to the positioning request RQ. Meanwhile, the first electronic device 20 generates a corresponding virtual information VR based on the positioning information P. The first electronic device 20 sends the positioning information P and the virtual information VR to the server 10. Specifically, the first electronic device 20 generates the corresponding virtual information VR according to the latitude and longitude and the corresponding region name recorded in the positioning information P. In Step S140, the server 10 creates at least one virtual image V1 and at least one virtual sound V2 based on the virtual information VR, wherein the virtual image V1 is an image of building object, indoor object or person, the virtual sound V2 is a sound of fluid, running machine, animal or insect. In particular, the server 10 reads a plurality of image data VD and a plurality of sound data SD in a database 12 based on the virtual information VR to generate at least one virtual image V1 and at least one virtual sound V2. For example, regarding Taipei Ximen MRT station, these image data VD and sound data SD will correspond to an image of buildings nearby Taipei Ximen MRT Station, an indoor object or a person, and a sound of a fluid, running machine, animal or insect, for example, the sound of vehicles traveling outside the MRT station.

In Step S150, based on the positioning information P, the server 10 reads the corresponding reference image R1 and reference sound R2 in the database 12 to compare them with the at least one virtual image V1 and the at least one virtual sound V2. In Step S160, by comparing the reference image R1 and reference sound R2 with the virtual image V1 and the virtual sound V2 to determine if the similarity is greater than the threshold (e.g., 80%), the correctness of the positioning information P is confirmed. When the similarity is greater than the threshold, Step S170 is executed. On the other hand, when the similarity is not greater than the threshold, Step S140 is executed. Finally, in Step S170, the server 10 confirms the correctness of the positioning information P on the basis of the at least one virtual image V1 and the at least one virtual sound V2. The location of the first electronic device 20 is confirmed based on the at least one virtual image V1 and the at least one virtual V2 together with the positioning information P. The location of the first electronic device 20 is further sent back to the second electronic device 30. Meanwhile, the virtual image V1 and virtual sound V2 can be further sent to the second electronic device 30.

Moreover, in another embodiment, the virtual information VR further contains a time mark (not shown) of the virtual image V1 and the virtual sound V2. Therefore, in Step S140, the first electronic device 20 creates the virtual image V1 and the virtual sound V2 not only based on the positioning information P, but also based on the aforementioned time mark.

To sum up, the method for real and virtual combined positioning of the present invention captures scene images and scene sounds outside the electronic device, or creates virtual information based on the positioning information for the server to create corresponding virtual images and virtual sounds, so as to confirm the correctness of the positioning information and to improve the reliability of the positioning information.

Described above are only preferred embodiments of the present invention and are not intending to limit the scope of the present invention. Therefore, any equal changes and modifications to the shape, structure, characteristics and spirit defined in the claims of the present invention shall be covered in the protection scope of the present invention.

## Claims

1. A method for real and virtual combined positioning, which comprises: a server send a positioning request to a first electronic device; according to the positioning request, the first electronic device generates a positioning information, at least one scene image and at least one scene sound and send to the server, wherein, the first electronic device uses the image capturing unit captures at least one scene image nearby the first electronic device; the first electronic device uses the sound capturing unit captures at least one scene sound near the first electronic device, the server reads a database at least one reference image and at least one reference sound according to the positioning information and compares them to the at least one scene image and the at least one scene sound to confirm the correctness of the positioning information; and the server confirms the location of the first electronic device based on the at least one scene image, the at least one scene sound and the positioning information.

2. The method for real and virtual combined positioning of Claim 1, wherein, at least one scene image is an image of building object, indoor object or person.

3. The method for real and virtual combined positioning of Claim 1, wherein, at least one scene sound is a sound of fluid, running machine, animal or insect.

4. The method for real and virtual combined positioning of Claim 1, wherein, in the step where the first electronic device generates a positioning information at least one scene image and at least one scene sound according to the positioning request and sends them to the server, the electronic device obtains the positioning information through a global positioning system (GPS), a gyroscope, an accelerometer or a combination thereof to send to the server.

5. The method for real and virtual combined positioning of Claim 1 also includes: a second electronic device sends the positioning request to the server.

6. The method for real and virtual combined positioning of Claim 1, wherein, in the step where the first electronic device produces a positioning information, at least one scene image and at least one scene sound according to the positioning request and sends them to the server, the first electronic device further sends a time mark to the server. The time mark corresponds to the at least one scene image and the at least one scene sound, so that the server can compare the at least one scene image and the at least one scene sound based on the positioning information and further on the time mark.

7. A method for real and virtual combined positioning, which comprises: a server send a positioning request to a first electronic device; according to the positioning request, the first electronic device generates a positioning information, and meanwhile generates a virtual information and send to the server, the virtual information contains a virtual parameter of at least one virtual image and at least one virtual sound; based on the virtual information, the server creates at least one virtual image and at least one virtual sound, said at least one virtual image and at least one virtual sound correspond to positioning information; the server reads at least one reference image and at least one reference sound according to the positioning information and compare them with the at least one virtual image and the at least one virtual sound to confirm the correctness of the positioning information; and the server confirms the location of the first electronic device based on the at least one virtual image, the at least one virtual sound and the positioning information.

8. The method for real and virtual combined positioning of Claim 7, wherein, said at least one virtual image is an image of building object, indoor object or person.

9. The method for real and virtual combined positioning of Claim 7, wherein, said at least one virtual sound is a sound of fluid, running machine, animal or insect.

10. The method for real and virtual combined positioning of Claim 7, wherein, in the step where the first electronic device sends a positioning information and a multimedia information to the server through an application and according to the positioning request, the first electronic device obtains the positioning information through a global positioning system (GPS), a gyroscope, an accelerometer or a combination thereof to send to the server.

11. The method for real and virtual combined positioning of Claim 7 also includes a step where a second electronic device sends the positioning request to the server.

12. The method for real and virtual combined positioning of Claim 7, wherein, in the step where the first electronic device generates a positioning information according to the positioning request, and generates a virtual information based on the positioning information to send to the server, the first electronic device generates the virtual information based on the latitude and longitude and a region name of the positioning information.

13. The method for real and virtual combined positioning of Claim 7, wherein, in the step where the server creates at least one virtual image and at least one virtual sound based on the virtual information, the server reads a plurality of image data and a plurality of sound data in the region database based on the virtual information to produce at least one virtual image and at least one virtual sound.

14. The method for real and virtual combined positioning of Claim 7, wherein, the virtual information further contains a time mark of the at least one virtual image and the at least one virtual sound. Specifically, in step where the server creates at least one virtual image and at least one virtual sound based on the virtual information, the first electronic device creates the at least one virtual image and the at least one virtual sound based on the positioning information and further on the time mark.
